Europäisches Patentamt

European Patent Office

Office européen des brevets

(19)

(11) Veröffentlichungsnummer: **0 005 258**
**B1**

(12)

# EUROPÄISCHE PATENTSCHRIFT

(21) Anmeldenummer: **79101317.0**

(22) Anmeldetag: **02.05.79**

(51) Int. Cl.³: **B 60 R 3/00, B 60 P 3/32**

(54) Einstiegstufe für Wohnwagen

(30) Priorität: **10.05.78 DE 2820291**
**28.07.78 DE 2833094**

(43) Veröffentlichungstag der Anmeldung:
**14.11.79 Patentblatt 79/23**

(45) Bekanntmachung des Hinweises auf die Patenterteilung:
**10.12.80 Patentblatt 80/25**

(84) Benannte Vertragsstaaten:
**BE FR GB IT NL SE**

(56) Entgegenhaltungen:
**DE - U - 7 116 816**
**US - A - 2 788 166**
**US - A - 3 407 901**

(73) Patentinhaber: **Tripus-Kunststoffteile GmbH.**
**Postfach 469**
**D - 8870 Günzburg (DE)**

(72) Erfinder: **Blach, Hans**
**Am Hohen Rain 1**
**D - 8871 Bubesheim (DE)** ·

(74) Vertreter: **Munk, Ludwig, Dipl-Ing.**
**Maximilianstrasse 71**
**D - 8900 Augsburg (DE)**

Courier Press, Leamington Spa, England.

Einstiegstufe für Wohnwagen

Die Erfindung betrifft eine Einstiegstufe für Wohnwagen mit einem zweiseitig abgestützten Trittbrett, das einerseits mit mindestens einem nach unten weisenden, eine Standfläche aufweisenden Stützfuß und andererseits mit mindestens einem eine an einem wohnwagenseitig anzubringenden Beschlag festlegbare Einhängklaue aufweisenden Haltearm versehen ist.

Eine Einstiegstufe etwa dieser Art ist aus der DE-Gbm-Schrift 71 16 816 bekannt. Diese bekannte Anordnung besteht aus einer Stufenleiter mit zwei seitlichen Leiterholmen, an denen mehrere Trittstufen festgelegt sind. Das untere Ende der Holme ist zur Bildung einer Standfläche abgeschrägt und mit einer Auflageplatte versehen. Am oberen Ende der Holme sind zwei in der Betriebsstellung eine etwa waagrechte Brücke bildene Haltearme festgelegt, die ebenfalls mit Stufen belegt sind. Bei einer Stufenleiter dieser Art ergibt sich ersichtlich lediglich bei einer bestimmten Einstieghöhe eine waagrechte Ausrichtung der Trittstufen. Infolge der starren Festlegung der Haltearme ist hierbei eine Einstellmöglichkeit auf die verschiedenen Einstieghöhen unterschiedlicher Wohnwagentypen nicht vorhanden. Für jede Wohnwagentype muß daher eine Stufenleiter bestimmter Länge auf Lager gehalten werden. Nachteilig für den Wohnwagenbesitzer ist dabei, daß bei einer Neuanschaffung eines Wohnwagens die zum alten Wohnwagen passende Stufenleiter vielfach nicht brauchbar ist.

Aus der US-PS 3 407 901 ist zwar eine durch eine Stufenleiter gebildete Einsteigstufe bekannt, die eine Anpassung an unterschiedliche Einstieghöhen ermöglicht. Die seitlichen Leiterholme bestehen bei dieser bekannten Anordnung hierzu aus einem Obergurt und einem Untergurt, an denen die Trittstufen und untere Standplatten gelenkig festgelegt sind und hiermit praktisch einen parallelogrammartig zusammenklappbaren Rahmen bilden. Bei dieser bekannten Anordnung sind lediglich die Obergurte der beiden Leiterholme an einem wohnwagenseitig vorgesehenen Beschlag einhängbar, so daß sich die Trittstufen mit Hilfe der frei beweglichen Untergurte stets parallel zu den bodenseitig abgestützten Standplatten einstellen. Nachteilig hierbei ist, daß im Bereich jeder Trittstufe praktisch vier Schwenklager benötigt werden, was sich nicht nur negativ auf den baulichen Aufwand und damit die Herstellungskosten, sondern auch auf den erforderlichen Wartungsaufwand auswirkt. Außerdem ergibt sich bei dieser bekannten Anordnung bei unterschiedlichen Einstieghöhen nicht nur eine unterschiedliche Stufenhöhe, sondern gleichzeitig auch eine unterschiedliche Holmneigung und damit eine unterschiedliche Stufenüberdeckung, was sich negativ auf die Begehbarkeit und damit die Sicherheit auswirken kann. Ein weiteres Sicherheitsrisiko besteht darin, daß diese bekannte Anordnung eine Schwenkaufhängung der Leiterholme am wohnwagenseitig vorgesehenen Beschlag erfordert und damit eine einfache Verriegelung praktisch nicht gestattet.

Aus der US-PS 2 788 166 ist eine weitere Einstiegstufe bekannt, die auf verschiedene Einstieghöhen einstellbar ist. Diese bekannte Anordnung besteht aus einer auf vier Terrainspindeln ruhenden Grundplatte, auf der eine Trittstufe höhenverstellbar festlegbar ist. Diese Trittstufe ist hierzu mit zwei nach unten weisenden Füßen versehen, die in zugeordnete Schlitze der Grundplatte eingreifen und mit Hilfe von auf der Grundplatte angeordneten Riegeln, denen trittstufenfußseitig mehrere höhenmäßig gegeneinander versetzte Schlitze zugeordnet sind, in verschiedenen Stellungen feststellbar sind. Hierbei handelt es sich um eine zwar in der Höhe einstellbare, aber offensichtlich lediglich bodenseitig abgestützte Trittstufe, die ein fach vor die Eingangstüre des betreffenden Wohnwagens hingestellt wird. Stufen dieser Art haben sich jedoch nicht bewährt, da hierin eine nicht unbeträchtliche Gefahrenquelle zu sehen ist. Zum einen ist es nämlich nicht zu verhindern, daß derart lose aufgestellte Stufen verrutschen und damit ihren ursprünglich vorgesehenen Aufstellungsort verändern, was zu Fehltritten führen kann. Zum anderen besitzen Stufen dieser Art eine relativ schlechte Standsicherheit, insbesondere wenn es sich beim Aufstellungsort um relativ unebenes Gelände handelt, was eine erhöhte Kippgefahr bedeutet. In diesem Zusammenhang kann nämlich nicht übersehen werden, daß mit der Aufstellung und Einjustierung derartiger Trittstufen nicht geschultes Personal, sondern in der Regel mehr oder weniger ungeübte Privatpersonen befaßt sind. Ganz abgesehen davon sind die Einstellmöglichkeiten bei der bekannten Anordnung höchst begrenzt und liegen ersichtlich in der Größenordnung der Dicke der Grundplatte. Außerdem erfordert die bekannte Anordnung einen nicht unerheblichen baulichen Aufwand, der sich negativ auf die Herstellungskosten und damit auf den Abgabepreis auswirken wird.

Hier will die Erfindung Abhilfe schaffen. Die Erfindung, wie sie in den Ansprüchen gekennzeichnet ist, löst ausgehend vom oben diskutierten Stand der Technnick die Aufgabe, mit einfachen und daher kostengünstigen Mitteln eine Einstiegstufe für Wohnwagen zu schaffen, die nicht nur kippsicher und verrutschsicher aufstellbar ist, sondern auch leicht und einfach herstellbar und einfach bedienbar ist, und die gleichzeitig eine Anpassung der Einstieghöhe an die Verhältnisse des Einzelfalls ermöglicht und zwar bei gleichbleibend guter Begehbarkeit.

Diese Aufgabe wird gemäß dem übergeordneten Anspruch 1 dadurch gelöst, daß jeder Haltearm einen am Trittbrett lösbar festlegbaren Verlängerungsschenkel aufweist, dessen Länge die Breite der hieran zur Anlage kommenden Trittbrettwand übersteigt und der mehrere höhenmäßig gegeneinander versetzte Befestigungselemente aufweist.

Diese Maßnahmen stellen nicht nur sicher, daß in vorteilhafter Weise mit einer Stufengröße praktisch alle Wohnwagenmodelle bedienbar sind, was eine rationale Herstellung und Lagerhaltung gewährleistet, sondern ermöglichen gleichzeitig auch eine einfache und sichere wohnwagenseitige Festlegung der Trittstufe. Die Unterteilung in Trittbrett mit Stützfuß einerseits und Haltearm mit Verlängerungsschenkel andererseits ergibt ferner in vorteilhafter Weise zwei mit verhältnismäßig einfachen Formen herstellbare Teile, was dem Wunsch sehr entgegenkommt, einen Artikel vorliegender Art als Kunststoff-Spritzgußformling auszubilden, um einerseits eine völlige Wartungsfreiheit sowie geringe Herstellungskosten zu gewährleisten und andererseits aber auch sicherzustellen, daß auch bei starker Sonneneinstrahlung die Erwärmung in Grenzen bleibt, was sich ebenfalls positiv auf die Begehbarkeit und damit die Sicherheit auswirkt.

Die im Anspruch 2 gekennzeichnet zweckmäßige Weiterbildung der übergeordneten Maßnahmen ergibt gute Sichtverhältnisse beim Einhängen der Trittstufe am wohnwagenseitigen Beschlag und vergrößert in vorteilhafter Weise die Ausladung des Trittbretts. Die im Anspruch 3 gekennzeichnete Maßnahme kann das Einstellen der gewünschten Höhe besonders erleichtern.

Die im Anspruch 4 näher gekennzeichnete bevorzugte Ausgestaltung der übergeordneten Maßnahmen gewährleistet in vorteilhafter Weise einen sauberen Formschluß im Bereich der Trennfuge, was eine ausgezeichnete Entlastung der zur Bildung der Verbindungselemente vorgesehenen Schrauben oder dergleichen ergibt.

Eine ganz besonders vorteilhafte Einhängklauenausführung ist im Anspruch 6 gekennzeichnet. Eine Anordnung dieser Art arbeitet in vorteilhafter Weise ohne Schnappverschluß und ist daher auch von ungeübten bzw. schwachen und zarten Personen sicher und einfach bedienbar. Gleichzeitig ist in vorteilhafter Weise eine relativ starke Dimensionierung und steife Durchbildung ohne weiteres zu verwirklichen, da keinerlei Elastizität im Bereich der Einhängklaue erforderlich ist. Die hiermit erzielbaren Vorteile sind demnach insbesondere in einer vergleichsweise besonders hohen Sicherheit und Lebensdauer zu sehen.

Weitere zweckmäßige Ausgestaltungen der übergeordneten Maßnahmen ergeben sich aus der nachstehenden Beschreibung einiger Ausführungsbeispiele anhand der Zeichnungen in Verbindung mit den restlichen Unteransprüchen. Hierbei zeigen

Figur 1 ein erstes Ausführungsbeispiel der Erfindung anhand einer Seitenansicht einer in Stellung gebrachten Einstiegstufe teilweise im Schnitt,

Figur 2 eine Ansicht eines Haltearms in Richtung des Pfeils A in Figur 1 gesehen,

Figur 3 eine besonders vorteilhafte Ausführungsform der Einhängklaue in Figur 1 entsprechender Darstellung und

Figur 4 eine Frontansicht des wohnwagenseitig anzubringenden Beschlags gemäß Figur 3.

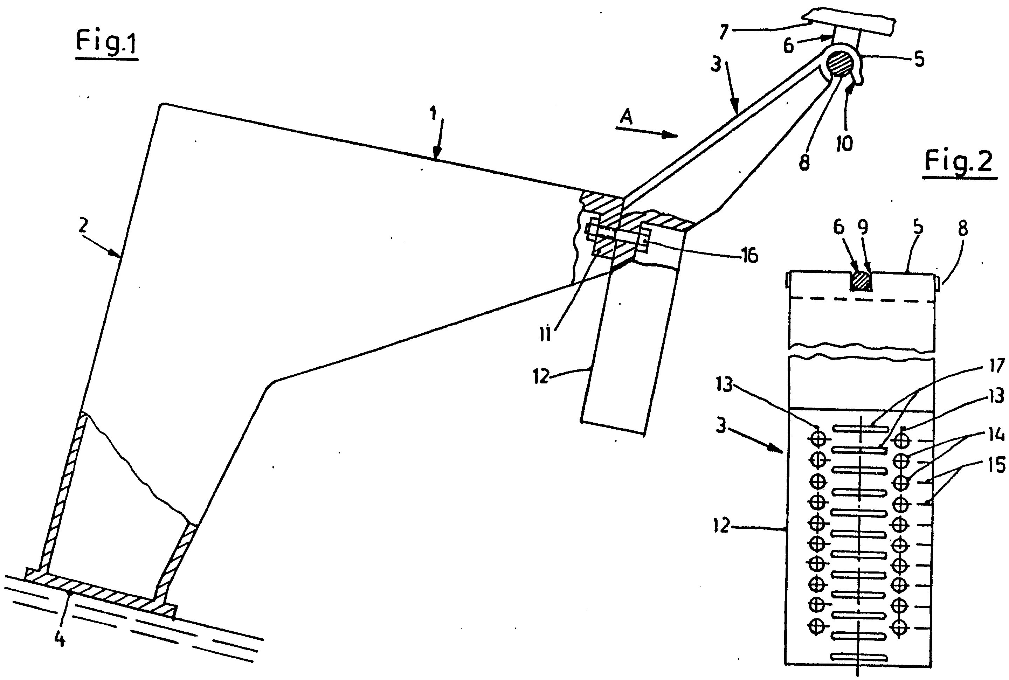

Die in Figur 1 dargestellte Einstiegstufe besitzt ein Trittbrett 1, das gegenüber dem Aufstellungsort in normalem Stufenabstand, das ist etwa 24 cm über dem Boden, fixiert ist. Hierzu ist das Trittbrett 1 einerseits an einem frontseitig vorgesehenen, nach unten ragenden Stützfuß 2 und andererseits an mindestens einem wohnwagenseitig auskragenden, nach oben abstehenden Haltearm 3 festgelegt. Der Stützfuß 2, der sich vorteilhaft über die gesamte Frontseite erstrecken kann, ist im Bereich seiner beiden seitlichen Ecken mit Standflächen 4 zur bodenseitigen Auflage versehen. Bei Ausführungen mit lediglich einem Haltearm 3 ist dieser etwa mittig angeordnet. Als besonders zweckmäßig hat es sich jedoch herausgestellt, zwei parallele Haltearme vorzusehen, die ebenso wie die Standflächen 4 auf Abstand gesetzt sind. In der Darstellung nach Figur 1 ist hiervon lediglich ein Haltearm zu sehen. Der bzw. die Haltearme 3 sind im Bereich ihrer trittbrettfernen Enden mit jeweils einer Einhängklaue 5 versehen, die in einen geeigneten, wohnwagenseitig vorgesehenen Beschlag 6 einrastbar ist. Im dargestellten Ausführungsbeispiel soll der Beschlag 6 als T-Stück ausgebildet sein, das mit seinem Fuß am Boden 7 des Wohnwagen befestigt ist, was vorteilhaft mittels einer einzigen Schraube zu bewerkstelligen ist, und das mit seinem Querschaft 8 die Einhängklaue 5 aufnimmt. Die Einhängklaue 5 ist daher zweckmäßig, wie am besten aus Figur 2 erkennbar ist, mit einer dem Fuß des den Beschlag 6 bildenden T-Stücks zugeordneten, mittigen Ausnehmung 9 versehen. Zur Erzielung eines selbsttätigen Schnappverschlusses ist der Schaftaufnahmekanal der Einhängklaue 5 einfach leicht gegenüber der bei 10 angedeuteten Klauenöffnung hinterschnitten. Der bzw. die Haltearme 3 verlaufen, wie Figur 1 weiter erkennen läßt, vom Trittbrett weggeneigt. Hierdurch wird die erforderliche Trittbrettbreite reduziert. Gleichzeitig ergeben sich hierdurch beim Einhängvorgang gute Sichtverhältnisse, was ausgezeichnete Bedienungsfreundlichkeit bedeutet.

Der Figur 1 liegt eine zweiteilige Ausführungsform zugrunde, wobei die Trennfuge zwischen dem das Trittbrett 1 und dem hieran angeformten Stützfuß 2 aufweisenden Bauteil und dem bzw. den Haltearmen 3 verläuft. Dies gestattet eine variable Festlegung des bzw. der Haltearme 3, die im dargestellten Ausführungsbeispiel einfach mit einem Randflansch 11 des Trittbretts 1 verschraubt sind. Der bzw. die Haltearme 3 sind, wie Figur 1 weiter erkennen läßt, im Bereich der Trennfuge mit jeweils einem Verlängerungsschenkel 12 versehen, der den zugeordneten Randflansch 11 überragt und somit in unterschiedlichen Stellungen hieran festlegbar ist, was eine exakte Anpassung der jeweiligen Einhängklaue 5 an die Bodenhöhe der einzelnen Wohnwagenmodelle ermöglicht.

Hierzu iust jeder Verlängerungsschenkel 12, wie Figur 2 anschaulich zeigt, mit zwei parallelen Lochreihen 13 versehen, so daß je nach Lochwahl jede gewünschte Höhe einstellbar ist. Durch eine seitlich neben den höhenmäßig gegeneinander versetzten Löchern 14 angebrachte, hier durch Skalenstriche angedeutete Höhenskala 15 wird dabei das Auffinden des richtigen Lochpaares erleichtert. In der Regel reicht es aus, wenn de Randflansch 11 zur Aufnahme geeigneter Verbindungsschrauben 16 pro Haltearm 3 mit jeweils einem im Abstand der Lochreihen 13 angeordneten Lochpaar versehen ist.

Zur Entlastung der Verbindungsschrauben 16 sind der Randflansch 11 und jeder Verlängerungsschenkel 12 im Bereich der einander zugewandten Seiten mit einer ineinander passenden Rastprofilierung versehen, wie in Figur 2 durch die Zahnreihe 17 angedeutet ist. Die Teilung der Zahnreihe 17 entspricht dabei genau der Teilung der Lochreihen 13, so daß jedes Lochpaar der Lochreihen 13 zur Fluchtung mit dem jeweils zugeordneten Lochpaar des Randflansches 11 gebracht werden kann. Die hier vorzugsweise durch Zahnreihen gebildete Rastprofilierung ergibt ersichtlich einen sauberen Fromschluß.

Die benötigten Teile im Falle des der Figur 1 zugrunde leigenden Ausführungsbeispiels, d.h. das das Trittbrett 1 und den hieran angeformten Stützfuß 2 aufweisende Teil und der bzw. die Haltearme 3 mit jeweils vorgesehenem Verlängerungsschenkel 12 können zweckmäßig als Kunststoff-Spritzgußformlinge ausgebildet sein, was eine höchst rationelle Herstellung erlaubt. Hierbei ist es auch ohne weiteres möglich, beispielsweise im Bereich der Auftrittfläche des Trittbretts 1 eine geeignete Profilierung vorzusehen. Die Verwendung von Kunststoff gewährleistet in vorteilhafter Weise volle Wartungsfreiheit und verhindert zudem eine starke Aufheizung, was bei bekannten, aus Stahl gebauten Anordnungen als nachteilig empfunden wird. Polypropylen oder Actyalharz haben sich dabei als besonders zweckmäßige Materialien herausgestellt.

Der grundsätzliche Aufbau des nachstehend geschilderten Ausführungsbeispieles entspricht der Ausführung nach Figur 1 und 2. Für gleichbleibende Teile finden daher gleiche Bezugszeichen Verwendung.

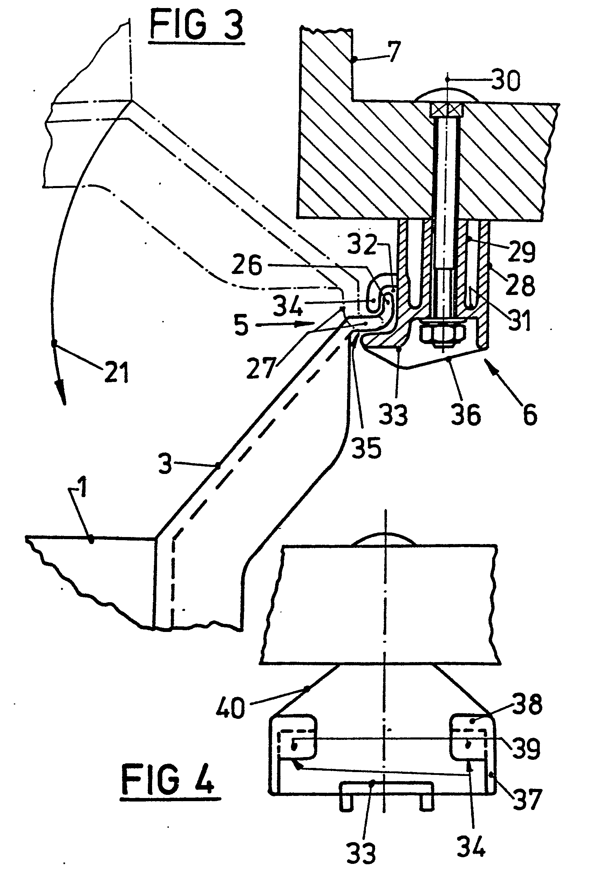

Die in Figur 3 dargestellte, ebenfalls mehrteilig ausgeführte Einstiegstufe besteht aus einem Trittbrett 1 mit einem hieran angeformten, hier nicht näher dargestellten Fuß sowie einem mittig angeordneten oder zwei im Bereich der Trittbrettflanken angeordneten, durch nicht näher dargestellte Schrauben höhenverstellbar am Trittbrett festlegbaren Haltearmen 3 die jeweils mit einer im Bereich ihres vom Trittbrett 1 weggeneigten Endes vorgesehenen Einhängklaue 5 an einem jeweils zugeordneten, an dem bei 7 angedeuteten Wohnwagenboden befestigten Beschlag 6 einhängbar sind. Die Einhängklaue 5 ist hier als Winkelleiste ausgebildet, deren freier Schenkel 26 vom Trittbrett 1 aus gesehen in der Betriebsstellung nach oben ragt, wie in Figur 1 mit durchgehenden Linien dargestellt ist. Der weitere Schenkel 27 der die Einhängklaue 5 bildenden Winkelleiste ist zweckmäßig an den zugehörigen Haltearm 3 angeformt, der vorteilhaft als einteiliger Spritzgußformling ausgeführt ist. Der wohnwagenseitig festgelegte Beschlag 6 ist mit einem steifen Halter 28 versehen, der am Wohnwagenboden 7 sauber anliegt und mittels einer eine zentrale Muffe 29 durchsetzenden Schraube 30, die sich an einem die Muffe 29 mit der äußeren Halterwandung verbindenden Zwischenboden 31 abstützt, mit dem Wohnwagenboden verbunden ist.

Im Bereich der Bedienungsseite, d.h. der von der Fahrzeugaußenseite her zugänglichen Seite ist der Beschlag 6 mit einer Klauenaufnahmekammer 32 versehen, die nach unten durch eine Auflage 33 für den Schenkel 27 der die Einhängklaue bildenden Winkelleiste und nach vorn durch eine den freien Schenkel 26 der die Einhängklaue 5 bildenden Winkelleiste hintergreifende Sperre 34 begrenzt ist, die durch eine Einstecköffnung 35 von der Auflage 33 abgesetzt ist. Die Auflage 33 ist zweckmäßig als an den Halter 28 angeformte Konsole ausgebildet, die durch Versteifungsrippen 36 versteift ist. Hierzu sind im dargestellten Ausführungsbeispiel einfach die Seitenwandungen des Halters 28 über die die Auflage 33 bildende Konsole heruntergezogen.

Im dargestellten Ausführungsbeispiel ist die den freien Schenkel 26 hintergreifende Sperre, wie Figur 4 am besten erkennen läßt, durch in den Ecken zwischen der seitlichen Begrenzung 37 und der oberen Begrenzung 38 der Klauenaufnahmekammer 32 angeordnete Laschen 39 begrenzt. Die seitliche Kammerbegrenzung 37, an welche hier die die vordere Kammerbegrenzung bildenden Laschen 39 angeformt sind, ergibt eine zuverlässige Sicherung der in die Klauenaufnahmekammer 32 eingeführten Einhängklaue gegen seitliches Verschieben. Anstelle der dargestellten Laschen könnten selbstverständlich auch Zapfen oder ein durchgehender Stift etc. vorgesehen sein. Auch die Verwendung von an die Rückwand 40 einfach angesetzten Winkelbügeln bzw. eines geschlossenen U-Bügels wäre denkbar. Die dargestellte Ausführungsform ergibt jedoch eine be-

7       **0 005 258**       8

sonders hohe Stabilität bei ausgezeichneter Zugänglichkeit und guten Sichtverhältnissen im Bereich der Einsteköffnung 35. Die die Kammerrückwand 40 bildende, die hier zur Bildung der seitlichen, oberen und vorderen Kammerbegrenzung vorgesehenen, mit den Laschen 39 versehenen Winkel tragende Wandung des Halters 28 kragt zweckmäßig über die Halterseitenwandungen aus, so daß eine relative große Klauenbreite vorgesehen sein kann. Die die Auflage 33 bildende Konsole kann über der gesamten Breite der Kammerrückwand 40 vorgesehen sein. Es genügt jedoch, wenn die Auflage 33 etwa auf den mittleren der Halterbreite entsprechenden Bereich beschränkt ist, was eine besonders steife Ausbildung ermöglicht und gleichzeitig eine saubere Dreipunktabstützung der in der Klauenaufnahmekammer 32 aufgenommenen Einhängklaue 5 ergibt.

Zum Einführen des freien Schenkels 26 in die Klauenaufnahmekammer 32 durch die Einsteköffnung 35 wird die gesamte Einstiegstufe einfach in die in Figur 3 mit strichpunktierten Linien angedeutete Stellung hochgeschwenkt, wobei der Schenkel 26 etwa in eine zur Auflage 33 parallele Lage kommt und somit einwandfrei in die Einsteköffnung 35 eingeführt werden kann. Anschließend wird die gesamte Einstiegstufe in Richtung des Pfeils 21 in die in Figur 3 mit durchgezogenen Linien angedeutete Betriebsstellung abgelassen, wobei der an den Haltearm 3 angeformte Schenkel 27 in Kontakt mit der Auflage 33 kommt und der freie Schenkel 26 durch die Sperre 34 hintergriffen wird. Trotz ausreichenden Bewegungsspiels ist dabei ein einfacher und sicherer Verschluß gewährleistet. Zweckmäßig kann der Übergangsbereich zwischen den Schenkeln 26 und 27 leicht abgerundet sein. Zum Abnehmen der Einstiegstufe wird diese einfach entgegen der Richtung des Pfeils 21 hochgeschwenkt, wobei dann der Schenkel 26 außer Eingriff mit der Sperre 34 kommt und durch die Einsteköffnung 35 herausgezogen werden kann.

**Patentansprüche**

1. Einstiegstufe für Wohnwagen mit einem zweiseitig abgestützten Trittbrett (1), das einerseits mit mindestens einem nach unten weisenden, eine Standfläche (4) aufweisenden Stützfuß (2) und andererseits mit mindestens einem eine an einem wohnwagenseitig anzubringenden Beschlag (6) festlegbare Einhängklaue (5) aufweisenden Haltearm (3) versehen ist, dadurch gekennzeichnet, daß jeder Haltearm (3) einen am Trittbrett (1) lösbar festlegbaren Verlängerungsschenkel (12) aufweist, dessen Länge die Breite der hieran zur Anlage kommenden Trittbrettwand (11) übersteigt und der mehrere, höhenmäßig gegeneinander versetzte Befestigungselemente (14) aufweist.

2. Einstiegstufe nach Anspruch 1, dadurch gekennzeichnet, daß jeder Haltearm (3) gegenüber seinem Verlängerungsschenkel (12) in der Betriebsstellung schräg nach oben weisend abgewinkelt ist.

3. Einstiegstufe nach Anspruch 1 oder 2, dadurch gekennzeichnet, daß neben den vorzugsweise in Form einer Lochreihe ausgebildeten, höhenmäßig gegeneinander versetzten Befestigungselementen (14) eine Skala (15) vorgesehen ist.

4. Einstiegstufe nach wenigstens einem der vorhergehenden Ansprüche 2 oder 3, dadurch gekennzeichnet, daß der Verlängerungsschenkel (12) jedes Haltearms (3) und die hieran zur Anlage kommende Trittbrettwand (11) auf der einander jeweils zugewandten Seite eine ineinander passende Rastprofilierung (17) aufweisen, deren Teilung der Teilung der höhenmäßig gegeneinander versetzten Befestigungselemente (14) entspricht.

5. Einstiegstufe nach wenigstens einem der vorhergehenden Ansprüche, dadurch gekennzeichnet, daß die Einhängklaue (5) jedes Haltearms (3) eine gegenüber ihrer Öffnung (10) hinterschnittene Schaftaufnahme aufweist.

6. Einstiegstufe nach wenigstens einem der vorhergehenden Ansprüche 1 bis 4, dadurch gekennzeichnet, daß die Einhängklaue (5) nach Art einer vorzugsweise üer die gesamte Breite des jeweils zugeordneten Haltearms (3) sich erstreckenden Winkelleiste mit von Trittbrett (1) aus gesehen nach oben ragendem freien Schenkel (26) ausgebildet ist und daß der der Einhängklaue (5) zugeordnete Beschlag (6) eine durch eine Auflage (33) nach unten and durch eine höhenmäßig hiervon durch eine Einsteköffnung (35) abgesetzte Sperre (34) nach vorne begrenzte Klauenaufnahmekammer (32) aufweist.

7. Einstiegstufe nach Anspruch 6, dadurch gekennzeichnet, daß die Sperre (34) über seitliche Begrenzungen (37) der Klauenaufnahmekammer (32) mit einem Halter (28) des Beschlags (6) verbunden ist.

8. Einstiegstufe nach Anspruch 7, dadurch gekennzeichnet, daß die Sperre (34) in den Bereichen zwischen den seitlichen und den oberen Kammerbegrenzungen (37 bzw. 38) jeweils angeordnete Laschen (39) aufweist.

9. Einstiegstufe nach wenigstens einem der vorhergehenden Ansprüche 6 bis 8, dadurch gekennzeichnet, daß die Auflage (33) als an den wohnwagenseitig festlegbaren Halter (28) angeformte Konsole ausgebildet ist, deren Breite der Breite des Halters (28) entspricht.

10. Einstiegstufe nach wenigstens einem der vorhergehenden Ansprüche, dadurch gekennzeichnet, daß der Stützfuß (2) an das Trittbrett (1) angeformt ist.

**Revendications**

1. Dispositif d'accès pour caravanes, comportant un marchepied arrêté des deux côtés et muni, d'une part, d'au moins un pied d'appui orienté vers le bas et présentant une

5

surface d'appui et, d'autre part, d'au moins un bras de suspension pourvu d'un crochet en vue de sa suspension par accrochage à une garniture solidaire du véhicule, caractérisé en ce que chaque bras de suspension présente une rallonge susceptible d'être fixée de manière démontable audit marchepied, rallonge dont la longueur est supérieure à la largeur de la paroi correspondante du marchepied, et que présente plusieurs éléments de fixation mutuellement décalés dans le sens de 1 hauteur.

2. Dispositif d'accès selon la revendication 1, caractérisé en ce que chaque bras de support est, dans sa position active, coudé par rapport à sa rallonge de manière à s'orienter obliquement vers le haut.

3. Dispositif d'accès selon la revendication 1 ou 2, caractérisé en ce qu'à côté des éléments de fixation mutuellement décalés dans le sens de la hauteur et se présentant de préférence sous forme d'une rangée de trous, est prévue une échelle graduée.

4. Dispositif d'accès selon l'une au moins des revendications 2 et 3, caractérisé en ce que ladite rallonge de chacun desdits bras de suspension et la paroi correspondante du marchepied présentent en des zones opposées des systèmes d'éléments d'encrantement complémentaires, c'est-à-dire susceptibles de coopérer par encrantement, dont la répartition correspond à celle desdits éléments de fixation mutuellement décalés dans le sens de la hateur.

5. Dispositif d'accès selon l'une au moins des revendications précédentes, caractérisé en ce que la gorge du crochet de chacun desdits bras de suspension, qui sert à recevoir une tige transversale, est un peu plus large que l'ouverture du crochet.

6. Dispositif d'accès selon l'une au moins des revendications précédentes 1 à 4, caractérisé en ce que chacun desdits crochets de suspension se présente sous forme d'un profilé en L, qui s'étend de préférence sur toute la largeur du bras de suspension correspondant, profilé en L, dont le bras libre, regardé à partir du marchepied, est dirigé vers le haut, et en ce que la garniture du véhicule avec laquelle coopère le crochet de suspension correspondant, présente un creux (chambre), limité vers le bas par une saillie et vers l'avant par un verrou séparé de cette saillie par une ouverture d'introduction.

7. Dispositif d'accès selon la revendication 6, caractérisé en ce que ledit verrou est fixé à un élément de support de ladite garniture par l'entremise de parois latérales que limitent ledit creux destiné à recevoir le crochet de suspension correspondant.

8. Dispositif d'accès selon la revendication 7, caractérisé en ce que ladit verrou est muni d'éclisses disposées entre les parois latérales et la paroi supérieure dudit creux.

9. Dispositif d'accès selon l'une au moins des revendications précédentes 6 à 8, caractérisé en ce que ladite saillie se présente sous forme d'une console solidaire dudit élément de support de la garniture du véhicule, console dont la largeur correspond à celle de cet élément de support.

10. Dispositif d'accès selon l'une au moins des revendications précédentes, caractérisé en ce que ledit pied d'appui fait partie intégrante du marchepied.

**Claims**

1. Access step for caravans with a carriage step (1) supported on two sides, which is on the one hand provided with at least one supporting leg (2) pointing to the ground and having a base (4), and on the other hand provided with at least one bracket (3) which has an attach claw (5) that can be fixed to a mounting (6) which is itself to be fixed at the caravan, characterized in that each bracket (3) is provided with an extension leg (12) that can be fixed detachably to the carriage step (1), the length of which exceeds the width of the carriage step side (11) which comes in touch with the extension leg, and which is provided with several fastening elements (14) that are staggered in height.

2. Access step according to claim 1, characterized in that each bracket (3) points upwards at an angle in its operation position as compared to its extension leg (12).

3. Access step according to claim 1 or 2, characterized in that a graduation (15) is provided beside the fastening elements (14) which are staggered in height and are preferably designed in the form of a set of holes.

4. Access step according to one of the previous claims 2 or 3 at least, characterized in that the extension leg (12) of each bracket (3) and the carriage step side (11) coming in touch with the extension leg are provided with an interlocking catch profile (17), the spacing of which corresponds to the spacing of the fastening elements (14) that are staggered in height.

5. Access step according to one of the previous claims at least, characterized in that the attach claw (5) of each bracket (3) is provided with a shaft receptacle that is undercut as compared to its opening (10).

6. Access step according to one of the previous claims 1 to 4 at least, characterized in that the attach claw (5) is designed in the kind of an angle rail that preferably extends over the whole width of each bracket (3) coordinated to it, and has, seen from the carriage step, a free post (26) rising upwards, and that the mounting (6) coordinated to the attach claw (5) is provided with a claw receiving chamber (32) being limited at the bottom by a support (33) and limited at the front by a stop (34) which is separated in the height from the support by means of an insertion opening (35).

7. Access step according to claim 6, characterized in that the stop (34) is connected with a hold-fast (28) of the mounting (6) by means of lateral limitations (37) of the claw receiving chamber (32).

8. Access step according to claim 7, characterized in that the stop (34) is provided with clips (39) each arranged in the areas between the lateral and the top chamber limitations (37 resp. 38).

9. Access step according to one of the previous claims 6 to 8 at least, characterized in that the support (33) is designed as a console formed to the hold-fast (28) which can be fixed to the caravan, the width of the console corresponding to the width of the hold-fast (28).

10. Access step according to one of the previous claims at least, characterized in that the supporting leg (2) is formed to the carriage step (1).

O 005 258

Fig.2

Fig.1

FIG 3

FIG 4